# EUROPÄISCHE PATENTSCHRIFT

(11) **EP 1 528 289 B1**
(45) Veröffentlichungstag und Bekanntmachung des Hinweises auf die Patenterteilung: **21.11.2012**
(21) Anmeldenummer: 04024227.3
(22) Anmeldetag: 12.10.2004
(51) Int. Cl.: F16H 45/02

(54) **Torsionsschwingungsdämpfer**
Torsion vibration damper
Amortisseur de vibrations de torsion

(30) Priorität: 28.10.2003 DE 10350299; 16.12.2003 DE 10358902
(43) Veröffentlichungstag der Anmeldung: 04.05.2005
(73) Patentinhaber: ZF Friedrichshafen AG, 88046 Friedrichshafen (DE)
(72) Erfinder: Ackermann, Jürgen, Dr., 97421 Schweinfurt (DE); Frey, Peter, 97447 Gerolzhofen (DE); Rönnebeck, Ralf, 97453 Schonungen-Forst (DE); Sasse, Christoph, Dr., 97422 Schweinfurt (DE); Wack, Erwin, 97464 Niederwerrn (DE); Zerner, Frank, 96120 Bischberg (DE)

(56) Entgegenhaltungen:
- EP-A2- 0 744 563
- US-A- 5 655 635
- US-A- 5 813 506

## Beschreibung

Die Erfindung betrifft einen Torsionsschwingungsdämpfer gemäß dem Oberbegriff des Anspruches 1.

US 5,813,506 A offenbart einen Torsionsschwingungsdämpfer mit allen Merkmalen, die im Oberbegriff des Anspruches 1 genannt sind. Bei diesem Torsionsschwingungsdämpfer bildet ein Kolben der Überbrückungskupplung ein Aufnahmebauteil für ein antriebsseitiges Übertragungselement einer ersten Dämpfereinheit, indem der Kolben mittels Zapfen mit dem antriebsseitigen Übertragungselement verbunden ist. Die erste Dämpfereinheit ist über ein weiteres Übertragungselement mit einer zweiten Dämpfereinheit verbunden, die über ein abtriebsseitiges Übertragungselement mit einem Abtriebsbauteil in Wirkverbindung steht. Sowohl der ersten Dämpfereinheit als auch der zweiten Dämpfereinheit ist jeweils eine Drehwinkelbegrenzung zugeordnet. Die der ersten Dämpfereinheit zugeordnete Drehwinkelbegrenzung nutzt die den Kolben der Überbrückungskupplung mit dem antriebsseitigen Übertragungselement verbindenden Zapfen, indem jeder dieser Zapfen eine am weiteren Übertragungselement vorgesehene, in Umfangsrichtung langlochartige Aussparung durchdringt. Durch die Zapfen wird zudem der Axialabstand zwischen dem Kolben der Überbrückungskupplung und dem antriebsseitigen Übertragungselement festgelegt, und damit auch deren jeweilige axiale Distanz zu dem die Aussparung aufweisenden Übertragungselement. Dabei sind Maßnahmen zur Vermeidung von Kippbewegungen des die Aussparung aufweisenden Übertragungselementes gegenüber dem Kolben getroffen, indem axial zwischen dem Kolben und dem antriebsseitigen Übertragungselement eine Abstandshülse sowie ein Dichtring vorgesehen sind, wobei der letztgenannte zwischen der Abstandshülse und dem Kolben eingespannt ist. Das die Aussparung aufweisende Übertragungselement ist damit zwar am Kolben der Überbrückungskupplung abgestützt, jedoch ist davon auszugehen, dass hierdurch die Entkopplungsgüte des Torsionsschwingungsdämpfers aufgrund erhöhter Reibwirkung reduziert ist.

Aus der DE 197 24 973 C1 ist ein Torsionsschwingungsdämpfer für eine einen Kolben aufweisende Überbrückungskupplung einer hydrodynamischen Kupplungsvorrichtung in Form eines Drehmomentwandlers bekannt. Der Torsionsschwingungsdämpfer verfügt über eine Dämpfereinheit mit elastischen Energiespeichern, wobei ein antriebsseitiges Übertragungselement durch Deckbleche gebildet wird, die nicht nur untereinander verbunden sind, sondern zum einen mit der Überbrückungskupplung und zum anderen mit einer Turbinennabe drehfest sind. Diese Deckbleche wirken über die Energiespeicher mit einer als abtriebsseitiges Übertragungselement des Torsionsschwingungsdämpfers wirksamen Nabenscheibe zusammen, die einstückig mit einer Nabe ausgebildet ist, welche mit einem Abtriebsbauteil, wie beispielsweise einer Getriebeeingangswelle, in Drehverbindung bringbar ist.

Wie insbesondere Fig. 1 der DE 19724973 C1 erkennen lässt, durchgreift die Turbinennabe mit zumindest einem Vorsprung eine zugeordnete Aussparung in der Nabenscheibe, wobei der Vorsprung in Verbindung mit der Aussparung als Drehwinkelbegrenzung des Torsionsschwingungsdämpfers wirksam ist.

Eine derartige Drehwinkelbegrenzung erfüllt zwar den ihr zugrunde liegenden Zweck, indem die Relativdrehauslenkweite von antriebsseitigem Übertragungselement und abtriebsseitigem Übertragungselement des Torsionsschwingungsdämpfers in Umfangsrichtung begrenzt wird, jedoch wird hierdurch die Festigkeit der Nabenscheibe aufgrund der axial durchgängigen Aussparungen erheblich reduziert.

Der Erfindung liegt die Aufgabe zugrunde, eine Drehwinkelbegrenzung an einem Torsionsschwingungsdämpfer derart auszubilden, dass eine Reduzierung der Festigkeit von Bauteilen des Torsionsschwingungsdämpfers weitgehend vermieden wird.

Diese Aufgabe wird erfindungsgemäß durch die im Kennzeichen des Anspruches 1 angegebenen Merkmale gelöst.. Durch die Maßnahme, ein Übertragungselement der Dämpfereinheit des Torsionsschwingungsdämpfers mit wenigsten einem in Richtung zum jeweils anderen Übertragungselement überstehenden Vorsprung zu versehen, bleibt das mit dem Vorsprung ausgebildete Übertragungselement über seinen gesamten Querschnitt ungeschwächt. Ein anderes Übertragungselement weist zwar eine den erwähnten Vorsprung aufnehmende Aussparung auf, in welche der Vorsprung in Axialrichtung eingreift, jedoch ist das die Aussparung aufweisende andere Übertragungselement an einem Aufnahmebauteil vorgesehen, sodass eine aufgrund der Aussparung bewirkte Reduzierung der Steifigkeit dieses Übertragungselementes dadurch kompensiert wird, dass sich das Übertragungselement zumindest im Erstreckungsbereich dieser Aussparung an dem Aufnahmebauteil abstützen kann. Insofern ist selbst eine das Übertragungselement vollständig durchdringende Aussparung unkritisch, da das Aufnahmebauteil als stabilisierendes Element wirksam ist. Um allerdings einen unerwünschten Kontakt des in die Aussparung eingreifenden Vorsprunges mit dem Aufnahmebauteil zu vermeiden, greift der Vorsprung mit vorbestimmten Spiel in Axialrichtung in die Aussparung ein, wobei dieses Spiel mit Vorzug vermeidet, dass von einem Antrieb, wie beispielsweise der Kurbelwelle einer Brennkraftmaschine, eingeleitete Taumelschwingungen zu einem Kontakt zwischen Aufnahmebauteil und Vorsprung bei bestimmter Relativdrehstellung zueinander führen.

Bei Ausführung einer hydrodynamischen Kupplungsvorrichtung, wie beispielsweise eines Drehmomentwandlers oder einer Hydrokupplung mit einer einen Kolben aufweisenden Überbrückungskupplung, ist, sofern der axial auslenkbare Kolben als Aufnahmebauteil für das die Aussparung beinhaltende Übertragungselement wirksam ist, mit einer axialen Relativbewegung des Aufnahmebauteiles gegenüber dem Vorsprung zu rechnen. In einem derartigen Fall muss folglich das vorbestimmte Spiel in Axialrichtung zumindest dem Bewegungsbereich des Kolbens und damit des Aufnahmebauteiles in dieser Richtung entsprechen. Das Spiel in Axialrichtung zwischen Vorsprung und Aussparung der Drehwinkelbegrenzung wird demnach sowohl durch die konstruktive Ausgestaltung der hydrodynamischen Kupplungsvorrichtung als auch durch die Stärke der durch einen Antrieb eingeleiteten Taumelschwingungen bestimmt.

Mit Vorzug ist das die Aussparung beinhaltende Übertragungselement mit einem Trägerteil ausgebildet, der nicht nur mit den Aussparungen ausgebildet ist, sondern darüber hinaus zwischen jeweils zwei Aussparungen je eine Befestigungsstelle zur Anbindung des Übertragungselementes an das Aufnahmebauteil, wie beispielsweise dem Kolben, versehen ist. Damit kann sichergestellt werden, dass das Übertragungselement jeweils benachbart zu einer Aussparung am Aufnahmebauteil angebunden ist und damit die Stabilisierung des Übertragungselementes so dicht als möglich an der jeweiligen Aussparung erfolgt. Vorzugsweise ist hierbei der erwähnte Trägerteil des Übertragungselementes im Wesentlichen ringförmig ausgebildet und ermöglicht dem Übertragungselement seine eigentliche Funktion im Hinblick auf den Torsionsschwingungsdämpfer, indem zur Beaufschlagung von Energiespeichern der Dämpfereinheit benötigte Ansteuerelemente sich, ausgehend vom Trägerteil, im Wesentlichen radial gegenüber demselben erstrecken.

Mit besonderem Vorzug ist die Drehwinkelbegrenzung im Hinblick auf einen Torsionsschwingungsdämpfer anzuwenden, bei welchem mit Radialversatz zueinander zwei Dämpfereinheiten vorgesehen sind, wobei die Energiespeicher beider Dämpfereinheiten im Wesentlichen durch ein gemeinsames Zwischendeckblech gehalten sind, wobei diesem Zwischendeckblech aufgrund seiner Funktion der Ansteuerung der Energiespeicher beider Dämpfereinheiten die Funktion eines Zwischen-Übertragungselementes zukommt. Bei Anbindung des die Aussparung aufweisenden Übertragungselementes am Kolben der Überbrückungskupplung bildet dieses ein erstes antriebsseitiges Übertragungselement, durch welches in Umfangsrichtung erste Energiespeicher der antriebsseitigen Dämpfereinheit beaufschlagt werden. Diese ersten' Energiespeicher stützten sich mit ihren entgegengesetzten Enden an ersten abtriebsseitigen Ansteuerelementen des Zwischen-Übertragungselementes ab, das zudem mit zweiten antriebsseitigen Ansteuerelementen zur Beaufschlagung der Energiespeicher der abtriebsseitigen Dämpfereinheit versehen ist. Die Energiespeicher dieser abtriebsseitigen Dämpfereinheit stützen sich ihrerseits wiederum am zweiten abtriebsseitigen Ansteuerelementen ab.

Mit Vorzug ist bei einer derartigen konstruktiven Lösung mit einer antriebsseitigen Dämpfereinheit und einer abtriebsseitigen Dämpfereinheit der Vorsprung der Drehwinkelbegrenzung am Zwischen-Übertragungselement vorgesehen, um mit dem besagten Spiel in Axialrichtung in die am antriebsseitigen Übertragungselement vorgesehene Aussparung einzugreifen. Sofern die Energiespeicher einer der Dämpfereinheiten, beispielsweise diejenigen der abtriebsseitigen Dämpfereinheit, durch eine weitere Deckplatte beaufschlagt werden sollen, besteht die Möglichkeit, die Verbindung, durch welche diese Deckplatte am Zwischen-Übertragungselement befestigt werden soll, im Radialbereich des mit der Aussparung versehenen ersten antriebseitigen Übertragungselementes anzuordnen und die Vorsprünge der Drehwinkelbegrenzung in Form von zapfenartigen Verlängerungen an der Verbindung vorzusehen, zumal dann, wenn diese Verbindung als Vernietung ausgebildet ist.

Sofern die am Zwischen-Übertragungselement vorgesehene Drehwinkelbegrenzung zwischen den beiden Dämpfereinheiten des Torsionsschwingungsdämpfers wirksam ist, wird sie die Relativdrehauslenkweite zwischen dem ersten antriebsseitigen Übertragungselement und dem Zwischen-Übertragungselement der antriebsseitigen Dämpfereinheit begrenzen. Um die gleiche Wirkung auch bei der abtriebsseitigen Dämpfereinheit zu erzielen, ist anspruchsgemäß vorgesehen, wirkungsmäßig auch zwischen dem Zwischen-Übertragungselement und dem zweiten abtriebsseitigen Übertragungselement eine Drehwinkelbegrenzung vorzusehen. Mit besonderem Vorteil durchgreift hierbei eine zweite Verbindung, vorzugsweise in Form einer Vernietung, jeweils eine zugeordnete Ausnehmung in einer als abtriebsseitiges Übertragungselement dienenden Nabenscheibe, wobei auch an dieser Stelle das Bestreben vorliegt, eine durch die Ausnehmung bedingte, eventuelle Reduzierung der Festigkeit der Nabenscheibe durch beidseitig jeweils im radialen Erstreckungsbereich der Ausnehmung anliegende Elemente des Torsionsschwingungsdämpfers zu kompensieren, wobei es sich bei diesen Elementen einerseits um das Zwischen-Übertragungselement und andererseits um die an demselben befestigte Deckplatte handelt.

Darüber hinausgehend kann die zweite Verbindung in einer weiteren Funktion als Mitnehmer für ein Turbinenrad dienen, wodurch sich die Entkopplungsgüte des Torsionsschwingungsdämpfers erheblich steigern lässt, zumal dann, wenn das Turbinenrad, beispielsweise über den Turbinenfuß der Turbinenradschale, wirkungsmäßig zwischen den beiden Dämpfereinheiten angreift. Dies ist dann der Fall, wenn das Turbinenrad beispielsweise mit dem zweiten, antriebsseitigen Übertragungselement verbunden ist, welches, wie bereits erwähnt, durch das Zwischen-Übertragungselement und die Deckplatte gebildet werden kann.

Die den erfindungsgemäßen Torsionsschwingungsdämpfer aufweisende hydrodynamische Kopplungsvorrichtung kann über lediglich eine Reibfläche zwischen dem Wandlerdeckel des Wandlergehäuses und dem Kolben der Überbrückungskupplung verfügen, jedoch ist die Anzahl an Reibflächen durch Anordnung zumindest einer Lamelle axial zwischen dem Wandlerdeckel und dem Kolben steigerbar, um das durch die Überbrückungskupplung übertragbare Drehmoment zu erhöhen. Werden zwei oder mehrere Lamellen in die Überbrückungskupplung eingebracht, so ist es vorteilhaft, in Achsrichtung zwischen jeweils zwei Lamellen eine Zwischenlamelle einzubringen, die gegenüber dem Wandlerdeckel drehfest ist. Diese Drehfestigkeit ist beispielsweise durch Befestigung einer Drehsicherung am Wandlerdeckel realisierbar, wobei diese Drehsicherung mit Vorzug über eine Verzahnung drehfest mit der Zwischenlamelle verbunden ist. Bei Ausführung der Überbrückungskupplung beispielsweise mit zwei Lamellen und einer Zwischenlamelle entstehen insgesamt vier Reibflächen, sodass sich diese Überbrückungskupplung durch eine sehr hohe Drehmomentübertragungsfähigkeit auszeichnet. Es ist hierbei unerheblich, ob die Lamellen jeweils beidseits mit Reibbelägen ausgebildet sind, während die Zwischenlamelle reibbelagsfrei ist, oder ob die Lamellen an ihren jeweils der Zwischenlamelle zugewandten Seiten ohne Reibbeläge ausgebildet sind, die Zwischenlamelle dagegen beidseits Reibbeläge trägt.

Mit Vorzug ist die jeweilige Lamelle über eine Verzahnung drehfest an einem Haltebügel angebunden, der wiederum in drehfester Verbindung mit einem das Drehmoment auf den Torsionsschwingungsdämpfer leitenden antriebsseitigen Übertragungselement steht.

Im Folgenden wird ein Ausführungsbeispiel der Erfindung anhand einer Zeichnung näher erläutert. Es zeigt:
- Fig. 1: die obere Hälfte eines Längsschnittes durch einen hydrodynamischen Drehmomentwandler mit einer einen Kolben und einen Torsionsschwingungsdämpfer aufweisenden Überbrückungskupplung;
- Fig. 2: eine Herauszeichnung des Kolbens der Überbrückungskupplung und eines ersten antriebsseitigen Übertragungselementes des Torsionsschwingungsdämpfers in räumlicher Darstellung;
- Fig. 3: eine vergrößerte Darstellung des in Fig. 1 eingekreisten Bereiches Z, der gemäß einer in Fig. 2 gezeigten Schnittlinie A - A entstanden ist;
- Fig. 4: eine Schnittdarstellung des Kolbens der Überbrückungskupplung und des ersten antriebsseitigen Übertragungselementes des Torsionsschwingungsdämpfers gemäß der Schnittlinie B - B in Fig. 2;
- Fig. 5: wie Fig. 1, aber mit einer Überbrückungskupplung, die über Lamellen verfügt.

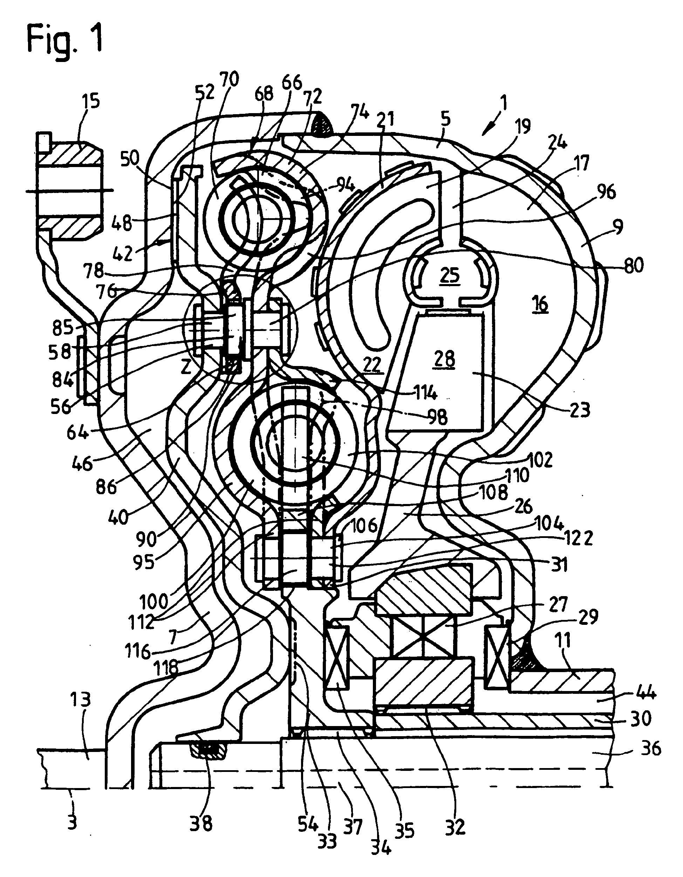

In Fig. 1 ist eine Kopplungsvorrichtung 1 in Form eines hydrodynamischen Drehmomentwandlers dargestellt, der um eine Drehachse 3 Rotationsbewegungen auszuführen vermag. Die hydrodynamische Kopplungsvorrichtung 1 verfügt über ein Wandlergehäuse 5, das an seiner einem nicht gezeigten Antrieb, wie beispielsweise einer Brennkraftmaschine, zugewandten Seite einen Wandlerdeckel 7 aufweist, der fest mit einer Pumpenradschale 9 verbunden ist. Diese geht im radial inneren Bereich in eine Pumpenradnabe 11 über.

Zurückkommend auf den Wandlerdeckel 7, weist dieser im radial inneren Bereich einen Lagerzapfen 13 auf, der in bekannter und daher nicht näher dargestellter Weise an einem Element des Antriebs, wie beispielsweise einer Kurbelwelle, zur antriebsseitigen Zentrierung des Wandlergehäuses 5 aufgenommen ist. Weiterhin verfügt der Wandlerdeckel 7 über eine Befestigungsaufnahme 15, die üblicherweise zur Befestigung des Wandlergehäuses 5 am Antrieb dient, und zwar vorzugsweise über eine nicht gezeigte Flexplatte. Bezüglich einer zeichnerischen Darstellung der Aufnahme des Lagerzapfens eines Drehmomentwandlers in einer Kurbelwelle eines Antriebs sowie einer Anbindung des Drehmomentwandlers über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Erwähnt werden sollte weiterhin, dass Leitradschaufeln 28 des Leitrades 23 auf einer Leitradnabe 26 vorgesehen sind, die auf einem Freilauf 27 angeordnet ist. Der Letztgenannte stützt sich über eine Axiallagerung 29 an der Pumpenradnabe 11 axial ab und steht in drehfester, aber axial relativ verschiebbarer Verzahnung 32 mit einer Stützwelle 30, die radial innerhalb der Pumpenradnabe 11 angeordnet ist und ebenso wie diese einen ringförmigen Versorgungskanal 44 radial begrenzt. Die als Hohlwelle ausgebildete Stützwelle 30 ihrerseits umschließt ein Abtriebsbauteil 36 in Form einer Getriebeeingangswelle, die mit einer Mittenbohrung 37 zum Durchgang von Hydraulikflüssigkeit versehen ist. Das Abtriebbausteil 36 nimmt über eine Verzahnung 34 eine Turbinennabe 33 drehfest, aber axial verschiebbar auf, wobei diese Turbinennabe 33 in einem radial äußeren Bereich zur Aufnahme eines Turbinenradfußes 31 dient. Die Turbinennabe 33 stützt sich einerseits über eine Axiallagerung 35 am bereits genannten Freilauf 27 ab, und kommt andererseits an einem Kolben 40 einer Überbrückungskupplung 42 zur Anlage. Nach radial innen hin ist der Kolben 40 über eine Abdichtung 38 gegenüber dem Abtriebsbauteil 36 abgedichtet.

Durch den ringförmigen Versorgungskanal 44 wird über in geläufiger Weise ausgebildete und daher nicht gezeigte Durchgänge in den Axiallagerungen 29 und/oder 35 der hydrodynamische Kreis 24 versorgt, während die Mittenbohrung 37 in dem Abtriebsbauteil 36 zur Druckbeaufschlagung des Kolbens 40 dient, wozu eine Verbindung mit einer Steuervorrichtung und einem Hydraulikflüssigkeitsvorrat erforderlich ist. Weder die Steuervorrichtung noch der Hydraulikflüssigkeitsvorrat sind zeichnerisch dargestellt, können aber der Fig. 1 der DE 44 23 640 A1 entnommen werden und sind daher als inhaltlich in die jetzt vorliegende Patentanmeldung aufgenommen zu betrachten.

Über die Mittenbohrung 37 des Abtriebsbauteils 36 eingeströmte Hydraulikflüssigkeit gelangt nach radial außen in eine Kammer 46, die axial zwischen dem Wandlerdeckel 7 und dem Kolben 40 angeordnet ist. Dieser zentrisch zum Wandlerdeckel 7 angeordnete Kolben 40 ist mit seiner von der Kammer 46 abgewandten Seite dem hydrodynamischen Kreis 24 zugewandt und in Abhängigkeit von den Druckverhältnissen im hydrodynamischen Kreis 24 sowie in der Kammer 46 zwischen zwei unterschiedlichen axialen Grenzstellungen bewegbar, auf die nachfolgend noch eingegangen wird.

Der Kolben 40 trägt im radial äußeren Bereich an seiner dem Wandlerdeckel 7 zugewandten Seite einen die Drehachse 3 ringförmig umschließenden Reibbelag 48, der an seiner vom Kolben 54 abgewandten Seite, nachfolgend als Reibbereich 50 bezeichnet, mit einem am Wandlerdeckel 7 vorgesehenen Gegenreibbereich 52 in kraftschlüssige Verbindung bringbar ist, sofern im hydrodynamischen Kreis 24 ein höherer Druck als in der Kammer 46 an der Gegenseite des Kolbens 40 anliegt.

Die erste der zuvor erwähnten Grenzstellungen des Kolbens 40 ist erreicht, wenn der Reibbelag 48 mit seinem Reibbereich 50 kraftschlüssig am Gegenreibbereich 52 zur Anlage gekommen ist. Die zweite Grenzstellung wird dagegen eingenommen, wenn in der Kammer 46 ein höherer Druck anliegt als im hydrodynamischen Kreis 24 und der Kolben 40 axial verlagert wird, bis er an einem Anschlag 54 der Turbinennabe 33 zur Anlage kommt.

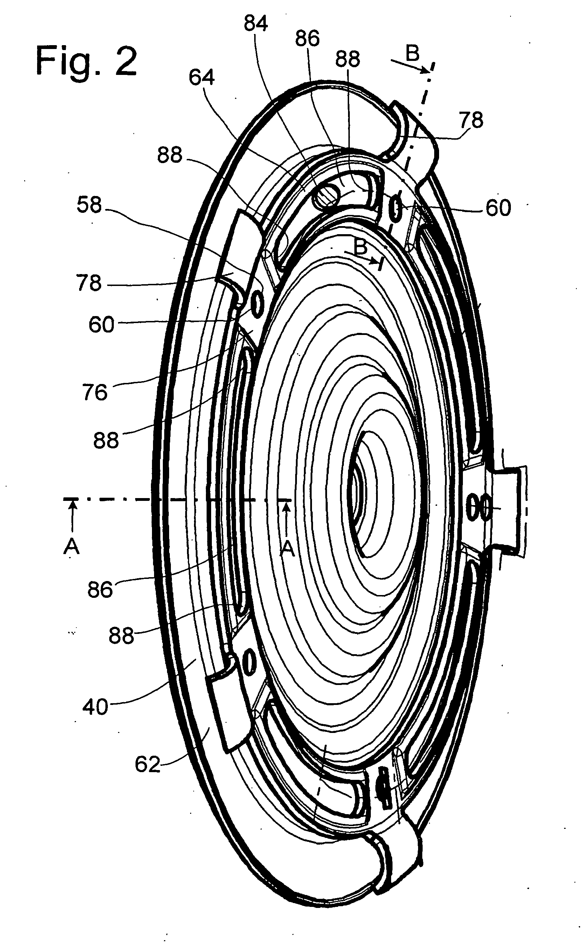

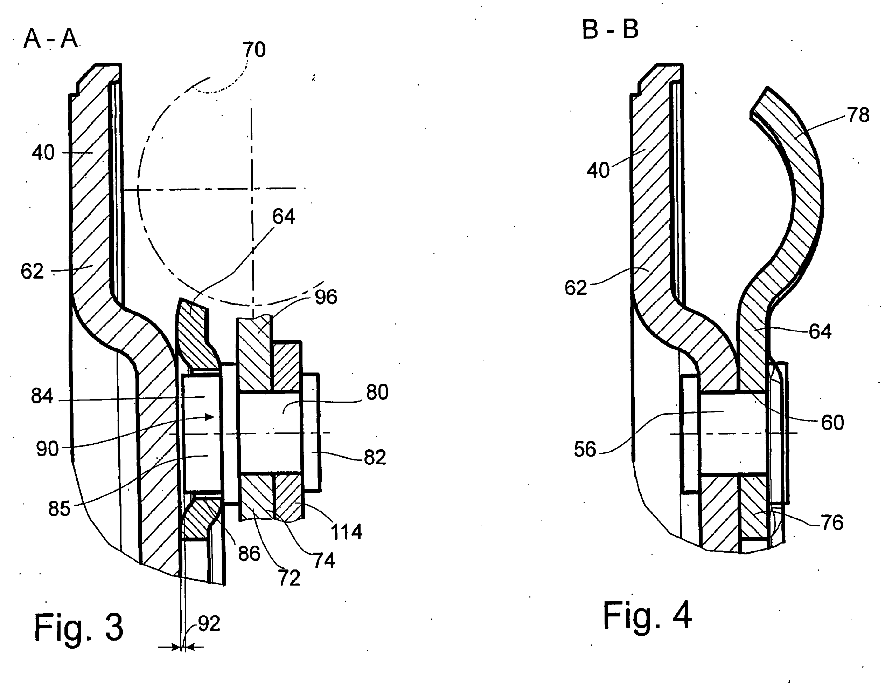

Fig. 1 zeigt einen Torsionsschwingungsdämpfer 68, der ebenso wie der Kolben 40 Teil der Überbrückungskupplung 42 des hydrodynamischen Drehmomentwandlers ist. Dieser Torsionsschwingungsdämpfer 68 weist ein erstes antriebsseitiges Übertragungselement 64 auf, das, wie Fig. 2 oder 4 zeigt, über einen Trägerteil 76 verfügt, mit welchem dieses Übertragungselement 64 unter Verwendung von Befestigungsmitteln 56 am Kolben 40 befestigt wird. Somit dient der Kolben als Aufnahmebauteil 62 für das erste antriebsseitige Übertragungselement 64.

Wie Fig. 2 zeigt, ist der Trägerteil 76 des ersten antriebsseitigen Übertragungselementes 64 im Wesentlichen ringförmig ausgebildet und verfügt, in vorbestimmten Umfangsabständen voneinander versetzt, über eine Mehrzahl von Öffnungen 60, welche jeweils von den in Fig. 4 zeichnerisch dargestellten Befestigungsmitteln 56 durchdrungen sind. In Umfangsrichtung zwischen jeweils zwei Befestigungsstellen 58 ist jeweils eine Aussparung 86 vorgesehen, wobei wiederum je zwei Aussparungen 86 je eine Befestigungsstelle 58 zwischen sich aufnehmen. Jede dieser Aussparungen 86 ist mit umfangsseitigen Enden 88 ausgebildet, die im Wesentlichen halbkreisförmig sind.

Jeweils radial außerhalb einer der Befestigungsstellen 58 ist je ein erstes antriebsseitiges Ansteuerelement 78 vorgesehen, durch welches erste Energiespeicher 70 (Fig. 1) einer radial außenliegenden, antriebsseitigen Dämpfereinheit 66 beaufschlagbar sind. Die ersten Energiespeicher 70 stützen sich anderenends an einem ersten abtriebsseitigen Ansteuerelement 94 eines Zwischendeckbleches 74 ab, das die ersten Energiespeicher 70 zumindest über einen Teil ihrer Umfangserstreckung umgibt. Radial innerhalb der ersten Energiespeicher 70 ist am Zwischendeckblech 74 eine Deckplatte 114 befestigt, wobei sich hierdurch eine erste Verbindung 80 ergibt, die mit Vorzug mittels einer Vernietung 82 realisiert ist. Diese Verbindung 80 ist in Fig. 3 vergrößert herausgezeichnet, sodass erkennbar ist, dass an der dem Kolben 40 zugewandten Seite der Verbindung 80 ein Vorsprung 84 vorgesehen ist, der, in Form einer an der Vernietung 82 ausgebildeten zapfenartigen Verlängerung 85, in die bereits beschriebene Aussparung 86 des ersten antriebsseitigen Übertragungselementes 64 eingreift. Das in Fig. 3 zeichnerisch dargestellte radiale Spiel zwischen der Aussparung 86 und dem Vorsprung 84 ist, der besseren Erkennbarkeit halber, übergroß herausgezeichnet. Von wesentlicher Bedeutung ist dagegen, dass der Vorsprung 84 in der Aussparung 86 eine Relativbewegung in Umfangsrichtung vollziehen kann, wobei die Aussparung 86 zur Gewährleistung einer vorgegebenen Relativauslenkweite zwischen dem ersten antriebsseitigen Übertragungselement 64 und dem Zwischendeckblech 74 mit einer entsprechenden Umfangserstreckung in Bezug zum Vorsprung 84 ausgebildet ist. In Fig. 2 ist beispielhaft in einer der Aussparungen 86 ein Vorsprung 84 in Schnittdarstellung abgebildet, wobei erkennbar ist, dass die bereits erwähnten, umfangsseitigen Enden 88 der Aussparungen 86 geometrisch an die Außenkontur des Vorsprunges 84 angepasst sind. Gemeinsam dienen der Vorsprung 84 am Zwischendeckblech 74 und die Aussparung 86 am ersten antriebsseitigen Übertragungselement 64 als Bestandteile einer ersten Drehwinkelbegrenzung 90 zwischen der Antriebsseite und der Abtriebsseite der antriebsseitigen Dämpfereinheit 66.

Während das erwähnte Zwischendeckblech 74 im Wesentlichen axial fest in der hydrodynamischen Kopplungsvorrichtung 1 aufgenommen ist, wird das erste antriebsseitige Übertragungselement 64 aufgrund seiner Befestigung am Kolben 40 einer Axialbewegung desselben nachgeführt, sodass das in Fig. 3 eingezeichnete Spiel 92 in Axialrichtung zumindest der Auslenkweite des Kolbens 40 in dieser Richtung entspricht, gegebenenfalls aber auch eventuellen Taumelbewegungen, die über das Wandlergehäuse 5 auf den Kolben 40 geleitet werden, Rechnung trägt.

Radial innerhalb der ersten Verbindung 80 umschließt das Zwischendeckblech 74 die zweiten Energiespeicher 102 der radial innenliegenden, abtriebsseitigen Dämpfereinheit 100 zumindest entlang eines Teils von deren Umfang, und auch die über die erste Verbindung 80 am Zwischendeckblech 74 befestigte Deckplatte 114 umschließt die zweiten Energiespeicher 102. Im Hinblick auf die abtriebsseitigen Dämpfereinheit 100 dient demnach das Zwischendeckblech 74 ebenso wie die Deckplatte 114 jeweils als zweites antriebsseitiges Übertragungselement 95, das mittels jeweils eines zweiten antriebsseitigen Ansteuerelementes 98 die zweiten Energiespeicher 102 einerends beaufschlagen, wobei sich diese Energiespeicher anderenends an zweiten abtriebsseitigen Ansteuerelementen 110 abstützen, die an einer Nabenscheibe 108 vorgesehen sind, die Teil der bereits erwähnten Turbinennabe 33 ist.

Durch die Funktion des Zwischendeckbleches 74 sowohl als erstes abtriebsseitiges Übertragungselement 72 wie auch als zweites antriebsseitiges Übertragungselement 95 wirkt dieses Zwischendeckblech 74 im Sinne eines Zwischen-Übertragungselementes 96 des Torsionsschwingungsdämpfer 68. Gemeinsam mit der Deckplatte 114 ist das Zwischen-Übertragungselement 96 radial innerhalb der zweiten Energiespeicher 102 mittels einer zweiten Verbindung 104 in Form einer Vernietung 106 miteinander verbunden, wobei die zweite Verbindung 104 eine Ausnehmung 118 in der Nabenscheibe 108 axial durchdringt. Die Ausnehmung 118 ist hierbei zur Gewährleistung einer vorgegebenen Relativauslenkweite zwischen dem Zwischen-Übertragungselement 96 sowie der Deckplatte 114 gegenüber der Nabenscheibe 108 mit einer entsprechenden Umfangserstreckung in Bezug zur zweiten Verbindung 104 ausgebildet, sodass diese zweite Verbindung zusammen mit der Ausnehmung 118 als zweite Drehwinkelbegrenzung 116 wirksam ist. Diese zweite Drehwinkelbegrenzung 116 ist der abtriebsseitigen Dämpfereinheit 66 zugeordnet.

In einer weiteren Funktion dient die zweite Verbindung 104 als Mitnehmer 122 für den an der Turbinenradschale 21 radial innen vorgesehenen Turbinenradfuß 31, sodass das Turbinenrad 19 als Masse bei Auslenkungen des Zwischen-Übertragungselementes 96 sowie der Deckplatte 114 mitausgelenkt wird. Durch diese Maßnahme, das Turbinenrad 19 als Masse wirkungsmäßig zwischen den beiden Dämpfereinheiten 66 und 100 des Torsionsschwingungsdämpfers anzubinden, wird die Wirkung des Letztgenannten vorteilhaft verbessert.

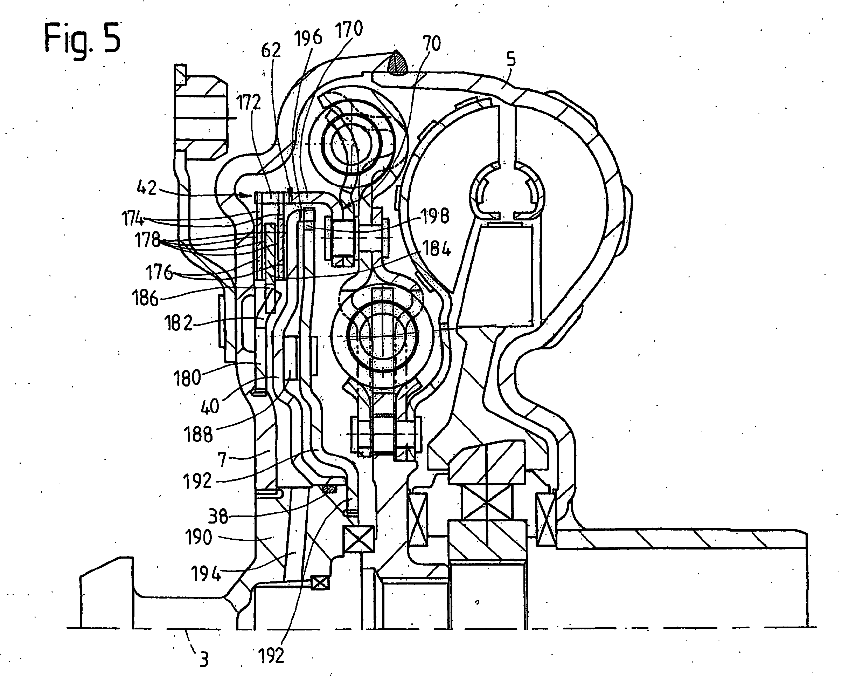

Fig. 5 zeigt eine Ausführung der hydrodynamischen Kopplungsvorrichtung 1, welche sich von derjenigen nach Fig. 1 im Wesentlichen durch den Aufbau der Überbrückungskupplung 42 unterscheidet. Diese weist nämlich axial zwischen einem Wandlerdeckel 7 des Wandlergehäuses 5 und dem Kolben 40 zwei Lamellen 176 auf, die im radial äußeren Bereich über Verzahnungen 174 verfügen, mit welchen sie drehfest, aber axial verschiebbar, in eine Verzahnung 172 eines Haltebügels 170 eingreifen, der über eine Befestigungsstelle 56 drehfest am ersten antriebsseitigen Übertragungselement 64 aufgenommen ist.

Die beiden Lamellen 176 tragen an beiden Axialseiten jeweils einen Reibbelag 178. Die beiden jeweils aufeinander zugewandten Reibbeläge 178 nehmen axial zwischen sich eine Zwischenlamelle 184 auf, die an ihrem radial inneren Ende über eine Verzahnung 186 verfügt, mit welcher sie in eine Verzahnung 182 einer Drehsicherung 180 eingreift, die drehfest am Wandlerdeckel 7 aufgenommen ist. Über die Verzahnungen 182, 186 ist die Zwischenlamelle 184 demnach drehfest mit dem Wandlergehäuse 5, während die Lamellen 176 aufgrund ihrer Verbindung mit dem ersten antriebsseitigen Übertragungselement 64 eine Bewegung relativ zum Wandlergehäuse 5 auszuführen vermögen.

Ungeachtet dessen, ob die Reibbeläge 178, wie zuvor beschrieben, jeweils an den Lamellen 176 angebracht sind, und die Zwischenlamelle 184 reibbelagsfrei ist, oder ob die Zwischenlamelle 184 beidseits mit Reibbelägen 178 versehen ist, die benachbarten Lamellen 176 an ihren entsprechenden Axialseiten dagegen reibbelagsfrei sind, ergeben sich aufgrund der Ausführung der Überbrückungskupplung 42 gemäß Fig. 5 vier Reibflächen, sodass wesentlich höhere Drehmomente übertragbar sind als bei einer Ausführung entsprechend Fig. 1, bei welcher lediglich eine einzelne Reibfläche vorhanden ist.

Der Kolben 40 ist auf einer Gehäusenabe 190 frei drehbar angeordnet, die als Strömungsdurchlass 194 eine Strömungsverbindung zwischen der Mittenbohrung 37 des Abtriebsbauteils 36 und der Kammer 46 herstellt. Der Kolben 40 ist über seinen Kolbenfuß auf einer Abdichtung 38 angeordnet und über Tangentialblattfedern 188 an einer Aufnahmevorrichtung 192 befestigt, die drehfest an der Gehäusenabe 190 aufgenommen ist. Eine Verdrehsicherung für den Kolben 40 wird durch eine an dessen Außenumfang vorgesehene Verzahnung 196 gebildet, die mit einer Verzahnung 198 der Aufnahmevorrichtung 192, ebenfalls an deren Außenumfang vorgesehen, in derehfester, aber axial verlagerbarer Verbindung steht.

### Bezugszeichenliste

- 1.: hydrodyn. Kopplungsvorrichtung
- 3.: Drehachse
- 5.: Wandlergehäuse
- 7.: Wandlerdeckel
- 9.: Pumpenschale
- 11.: Pumpenradnabe
- 13.: Lagerzapfen
- 15.: Befestigungsaufnahme
- 16.: Pumpenradschaufeln
- 17.: Pumpenrad
- 19.: Turbinenrad
- 21.: Turbinenradschale
- 22.: Turbinenradschaufeln
- 23.: Leitrad
- 24.: hydrodyn. Kreis
- 25.: Innentorus
- 26.: Leitradnabe
- 27.: Freilauf
- 28.: Leitradschaufeln
- 29.: Axiallagerung
- 30.: Stützwelle
- 31.: Turbinenradfuß
- 32.: Verzahnung
- 33.: Turbinennabe
- 34.: Verzahnung
- 35.: Axiallagerung
- 36.: Abtriebsbauteil
- 37.: Mittenbohrung
- 38.: Abdichtung
- 40.: Kolben
- 42.: Überbrückungskupplung
- 44.: Versorgungskanal

- 46.: Kammer
- 48.: Reibbelag
- 50.: Reibbereich
- 52.: Gegenreibbereich
- 54.: Anschlag
- 56.: Befestigungsstelle
- 58.: Befestigungsstelle
- 60: Öffnung
- 62.: Aufnahmebauteil
- 64.: erstes antriebsseitiges Übertragungselement
- 66.: antriebss. Dämpfereinheit
- 68.: Torsionsschwingungsdämpfer
- 70: erste Energiespeicher
- 72.: erste abtriebsseitiges Übertragungselement
- 74.: Zwischendeckblech
- 76.: Trägerteil
- 78.: erstes abtriebsseitiges Ansteuerelement
- 80.: erste Verbindung
- 82.: Vernietung
- 84.: Vorsprung
- 85.: zapfenartige Verlängerung
- 86.: Aussparung
- 88: umfangsseitige Enden
- 90.: erste Drehwinkelbegrenzung
- 92.: Spiel
- 94.: erst. abtriebss. Ansteuerelement
- 95.: zweites antriebs. Übertragungselement
- 96.: Zwischen-Übertragungselement
- 98: zweites antriebsseitige Übertragungselement
- 100.: abtriebss. Dämpfereinheit
- 102.: zweite Energiespeicher
- 104.: zweite Vernietung
- 106.: Vernietung
- 108.: Nabenscheibe
- 110.: zweites abtriebs. Ansteuerelement
- 114.: Deckplatte
- 116.: zweite Drehwinkelbegrenzung
- 118.: Ausnehmung
- 120.: zweites abtriebss. Übertragungselement
- 122.: Mitnehmer

- 170.: Haltebügel
- 172.: Verzahnung am Haltebügel
- 174.: Verzahnung an Lamellen
- 178.: Reibbeläge
- 180.: Drehsicherung
- 182: Verzahnung Drehsicherung
- 184.: Zwischenlamelle
- 186.: Verzahnung Zwischenlamelle
- 188.: Tangentialblattfedern
- 190.: Gehäusenabe
- 192.: Aufnahmevorrichtung
- 194.: Strömungsdurchlass
- 196.: Verzahnung Kolben
- 198.: Verzahnung Aufnahmevorrichtung

## Patentansprüche

1. Torsionsschwingungsdämpfer (68) für eine einen Kolben (40) aufweisende Überbrückungskupplung (42) einer hydrodynamischen Kupplungsvorrichtung (1), mit einem antriebsseitigen Übertragungselement (64) zumindest einer Dämpfereinheit (66, 100), die über ein ihr zugeordnetes abtriebsseitiges Übertragungselement (72) mit einem Abtriebsbauteil (36) in Wirkverbindung steht, wobei der Dämpfer einheit (66, 100) zumindest eine Drehwinkelbegrenzung (90, 116) zugeordnete ist, die über wenigstens einen an einem der Übertragungselemente (64, 72) in Richtung zum jeweils anderen Übertragungselement (64) überstehenden Vorsprung (84) und eine am anderen Übertragungselement (64) vorgesehene Aussparung (86) zur Aufnahme des Vorsprunges (84) verfügt, wobei die Aussparung (86) zur Gewährleistung einer vorgegebenen Relativauslenkweite zwischen den beiden Übertragungselementen (64, 72) mit einer entsprechenden Umfangserstreckung in Bezug zum Vorsprung (84) ausgebildet ist, wobei das die Aussparung (86) aufweisende Übertragungselement (64) der Dämpfereinheit (66) on einem Aufnahmebouteil (62) vorgesehen und zumindest im Erstreckungsbereich der Aussparung (86) an einem Aufnahmebauteil (62) abgestützt ist, **dadurch gekennzeichnet, dass**
der Vorsprung (84) an dem denselben aufnehmenden Übertragungselement (72) der Dämpfereinheit (66) mit vorbestimmtem Spiel (92) in Axialrichtung gegenüber dem Aufnahmebauteil (62) in die zugeordnete Aussparung (86) eingreift.

2. Torsionsschwingungsdämpfer nach Anspruch 1,
**dadurch gekennzeichnet,**
**dass** die Aussparung (86) über umfangsseitige Enden (88) verfügt, die bezüglich ihrer geometrischen Ausgestaltung an die Querschnittsform des Vorsprunges (84) angepasst sind.

3. Torsionsschwingungsdämpfer nach Anspruch 1 oder 2,
**dadurch gekennzeichnet,**
**dass** der Vorsprung (84) im Wesentlichen zapfenförmig und die umfangsseitigen Enden (88) der Aussparung (86) im Wesentlichen halbkreisförmig ausgebildet sind.

4. Hydrodynamische Kupplungsvorrichtung mit einer Überbrückungskupplung (42), welche einen Torsionsschwingungsdämpfer (68) nach Anspruch 1 aufweist und
**dadurch gekennzeichnet ist, dass** das Spiel (92) in Axialrichtung zwischen den beiden Übertragungselementen (64, 72) zumindest der Auslenkweite des Kolbens (40) der Überbrückungskupplung (42) in dieser Richtung entspricht.

5. Torsionsschwingungsdämpfer nach einem der Ansprüche 1 bis 3,
ober hydrodynamiche Kupplungsvorrichtung nach Anspruch 4, **dadurch gekennzeichnet,**
**dass** das die Aussparung (86) aufweisende Übertragungselement (64) über einen die Aussparung (86) beinhaltenden Trägerteil (76) und über zumindest ein am Trägerteil (76) vorgesehenes Ansteuerelement (78) für Energiespeicher (70) der Dämpfungseinheit (66) verfügt.

6. Torsionsschwingungsdämpfer nach Anspruch 5, ober hydrodynamiche Kupplungsvorrichtung nach Anspruch 5
**dadurch gekennzeichnet,**
**dass** der Trägerteil (76) des Übertragungselementes (64) in Umfangsrichtung zwischen je zwei Aussparungen (86) je eine Befestigungsstelle (58) zur Anbindung des Übertragungselementes (64) an das Aufnahmebauteil (62) aufweist.

7. Torsionsschwingungsdämpfer nach Anspruch 5, nach Anspruch 6 **dadurch gekennzeichnet,**
**dass** der Trägerteil (76) des Übertragungselementes (64) im Wesentlichen ringförmig ausgebildet ist.

8. Torsionsschwingungsdämpfer nach Anspruch 5, nach Anspruch 5
**dadurch gekennzeichnet,**
**dass** das zumindest eine Ansteuerelement (78) des Übertragungselementes (64) gegenüber dessen Trägerteil (76) im Wesentlichen radial übersteht.

9. Hydrodynamische Kupplungsvorrichtung mit einer Überbrückungskupplung (42), welche einen Torsionsschwingungsdämpfer (68) nach den Ansprüchen 1, 4 und 5 aufweist und **dadurch gekennzeichnet ist, dass** das Aufnahmebauteil (62) für den Trägerteil (76) durch den Kolben (40) gebildet ist und über an seiner Befestigungsstelle (58) durch jeweils ein eine Öffnung (60) im antriebsseitigen Übertragungselement (64) durchdringendes Befestigungsmittel (58) am Kolben (40) drehfest angebunden ist.

10. Torsionsschwingungsdämpfer nach einem der Ansprüche 1 bis 3 oder 5 bis 8, nach einem der Ansprüche 4 bis 9 **dadurch gekennzeichnet,**
**dass** durch ein erstes antriebsseitiges Übertragungselement (64) in Umfangsrichtung beaufschlagte erste Energiespeicher (70) einer antriebsseitigen Dämpfereinheit (66) mit ihren entgegengesetzten Enden an ersten abtriebsseitigen Ansteuerelementen (94) eines für die antriebsseitige Dämpfereinheit (66) als erstes abtriebsseitiges Übertragungselement (72) dienenden Zwischen-Übertragungselementes (96) abgestützt sind, und das Zwischen-Übertragungselement (96) den Vorsprung (84) der Drehwinkelbegrenzung (90) aufnimmt, sowie zur Beaufschlagung von zweiten Energiespeichern (102) einer abtriebsseitigen Dämpfereinheit (100) mit zweiten antriebsseitigen Ansteuerelementen (98) versehen ist.

11. Torsionsschwingungsdämpfer nach Anspruch 10, nach Anspruch 10,
**dadurch gekennzeichnet,**
**dass** das Zwischen-Übertragungselement (96) zur Bildung eines zweiten antriebsseitigen Übertragungselementes (95) für die abtriebsseitige Dämpfereinheit (100) über eine erste Verbindung (80) mit einer Deckplatte (114) fest verbunden ist, und die erste Verbindung (80) an ihrer jeweils dem antriebsseitigen Übertragungselement (64) der antriebsseitigen Dämpfungseinheit (66) zugewandten Seite über den Vorsprung (84) der Drehwinkelbegrenzung (90) in Form einer zapfenartigen Verlängerung (85) verfügt.

12. Torsionsschwingungsdämpfer nach Anspruch 11, nach Anspruch 11,
**dadurch gekennzeichnet,**
**dass** das zweite antriebsseitige Übertragungselement (95) der abtriebsseitigen Dämpfereinheit (100) radial innerhalb derselben durch eine zweite Verbindung (104) aneinander befestigt sind, und die zweite Verbindung (104) zur Bildung einer zweiten Drehwinkelbegrenzung (116) eine Ausnehmung (118) in einem zweiten abtriebsseitigen Übertragungselement (120) der abtriebsseitigen Dämpfereinheit (100) durchgreift, wobei die Ausnehmung (118) zur Gewährleistung einer vorgegebenen Relativauslenkweite zwischen den beiden Übertragungselementen (95, 120) mit einer entsprechenden Umfangserstreckung in Bezug zur zweiten Verbindung (104) ausgebildet ist.

13. Hydrodynamische Kupplungsvorrichtung mit einer Überbrückungskupplung (42), welche einen Torsionsschwingungsdämpfer (68) nach Anspruch 12 aufweist und**dadurch gekennzeichnet ist, dass** das abtriebsseitige Übertragungselement (120) der abtriebsseitigen Dämpfereinheit (100) drehfest mit einer Turbinennabe (33) ist, und die zweite Verbindung (104) in einer Zusatzfunktion als Mitnehmer (122) zur drehfesten Anbindung einer Turbinenradschale (21) des Turbinenrades (19) wirkungsmäßig zwischen den beiden Dämpfungseinheiten (66, 100) vorgesehen ist.

14. Torsionsschwingungsdämpfer nach einem der Ansprüche 11 bis 2,
nach einem der Ansprüche 11 bis 13 **dadurch gekennzeichnet,**
**dass** zumindest eine der beiden Verbindungen (80, 104) als Vernietung (82, 106) ausgebildet ist.

15. Hydrodynamische Kupplungsvorrichtung mit einer Überbrückungskupplung (42), welche einen Torsionsschwingungsdämpfer (68) nach den Ansprüchen 1 und 5 aufweist und **dadurch gekennzeichnet ist, dass** das Aufnahmebauteil (62) für den Trägerteil (76) durch einen Haltebügel (170) gebildet ist, der drehfest an zumindest einer axial zwischen dem Kolben (40) der Überbrückungskupplung (42) und dem Wandlerdeckel (7) des Wandlergehäuses (5) angeordneten Lamelle (176) verbunden ist.

16. Hydrodynamische Kupplungsvorrichtung nach Anspruch 15 **dadurch gekennzeichnet ist, dass** der Haltebügel (170) über eine Verzahnung (172) verfügt, in welche die Verzahnung (174) der Lamelle (176) drehfest, aber axial verlagerbar, eingreift.

17. Hydrodynamische Kupplungsvorrichtung nach Anspruch 15 oder 16 **dadurch gekennzeichnet ist, dass** die Lamelle (176) zumindest an einer ihrer axialen Seiten mit einem Reibbelag (178) versehen ist.

18. Hydrodynamische Kupplungsvorrichtung nach Anspruch 16 **dadurch gekennzeichnet ist, dass** der Haltebügel (170) über seine Verzahnung (172) mit den Verzahnungen (174) zumindest zweier Lamellen (176) drehfest, aber axial verlagerbar, verbunden ist, und in Achsrichtung zwischen je zwei Lamellen (176) eine Zwischenlamelle (184) vorgesehen ist, die mit einer Verzahnung (186) in eine zugeordnete Verzahnung (182) einer Drehsicherung (180) drehfest eingreift.

19. Hydrodynamische Kupplungsvorrichtung nach Anspruch 18 **dadurch gekennzeichnet ist, dass** die Drehsicherung (180) drehfest am Gehäusedeckel (7) des Kupplungsgehäuses (5) aufgenommen ist.

## Claims

1. Torsional vibration damper (68) for a lock-up clutch (42), which has a piston (40), of a hydrodynamic coupling device (1), having a drive-side transmission element (64) of at least one damper unit (66, 100) which is operatively connected to an output component (36) via an output-side transmission element (72) which is assigned to it, the damper unit (66, 100) being assigned at least one rotary-angle limiting means (90, 116) which has at least one projection (84), which protrudes at one of the transmission elements (64, 72) in the direction of the respective other transmission element (64), and a cut-out (86) which is provided on the other transmission element (64) for receiving the projection (84), the cut-out (86) being configured with a corresponding circumferential extent in relation to the projection (84) in order to ensure a predefined relative deflection width between the two transmission elements (64, 72), that transmission element (64) of the damper unit (66) which has the cut-out (86) being provided on a receiving component (62) and being supported on a receiving component (62) at least in the region of extent of the cut-out (86), **characterized in that** the projection (84) on the same receiving transmission element (72) of the damper unit (66) engages into the associated cut-out (86) with a predefined play (92) in the axial direction with respect to the receiving component (62).

2. Torsional vibration damper according to Claim 1, **characterized in that** the cut-out (86) has circumferential-side ends (88) which are adapted with regard to their geometric configuration to the cross-sectional shape of the projection (84).

3. Torsional vibration damper according to Claim 1 or 2, **characterized in that** the projection (84) is of substantially pin-shaped configuration and the circumferential-side ends (88) of the cut-out (86) are of substantially semicircular configuration.

4. Hydrodynamic coupling apparatus having a lock-up clutch (42) which has a torsional vibration damper (68) according to Claim 1 and is **characterized in that** the play (92) in the axial direction between the two transmission elements (64, 72) corresponds at least to the deflection width of the piston (40) of the lock-up clutch (42) in this direction.

5. Torsional vibration damper according to one of Claims 1 to 3, or hydrodynamic coupling apparatus according to Claim 4, **characterized in that** the transmission element (64) which has the cut-out (86) has a carrier part (76) which comprises the cut-out (86), and at least one actuating element (78) for energy stores (70) of the damping unit (66), which actuating element (78) is provided on the carrier part (76).

6. Torsional vibration damper according to Claim 5, or hydrodynamic coupling apparatus according to Claim 5, **characterized in that**, in the circumferential direction between in each case two cut-outs (86), the carrier part (76) of the transmission element (64) has in each case one fastening point (58) for attaching the transmission element (64) to the receiving component (62).

7. Torsional vibration damper according to Claim 5, or hydrodynamic coupling apparatus according to Claim 6, **characterized in that** the carrier part (76) of the transmission element (64) is of substantially annular configuration.

8. Torsional vibration damper according to Claim 5, or hydrodynamic coupling apparatus according to Claim 5, **characterized in that** the at least one actuating element (78) of the transmission element (64) protrudes substantially radially with respect to its carrier part (76).

9. Hydrodynamic coupling apparatus having a lock-up clutch (42), which has a torsional vibration damper (68) according to Claims 1, 4 and 5 and is **characterized in that** the receiving component (62) for the carrier part (76) is formed by the piston (40) and is attached in a rotationally fixed manner to the piston (40) at its fastening point (58) by way of in each case one fastening means (58) which penetrates an opening (60) in the drive-side transmission element (64).

10. Torsional vibration damper according to one of Claims 1 to 3 or 5 to 8, or hydrodynamic coupling apparatus according to one of Claims 4 to 9, **characterized in that** first energy stores (70), loaded in the circumferential direction by a first drive-side transmission element (64), of a drive-side damper unit (66) are supported with their opposite ends on first output-side actuating elements (94) of an intermediate transmission element (96) which serves as first output-side transmission element (72) for the drive-side damper unit (66), and the intermediate transmission element (96) receives the projection (84) of the rotary-angle limiting means (90), and is provided with second drive-side actuating elements (98) for loading second energy stores (102) of an output-side damper unit (100).

11. Torsional vibration damper according to Claim 10, or hydrodynamic coupling apparatus according to Claim 10, **characterized in that**, in order to form a second drive-side transmission element (95) for the output-side damper unit (100), the intermediate transmission element (96) is connected fixedly to a cover plate (114) via a first connection (80), and, on its side which faces in each case the drive-side transmission element (64) of the drive-side damping unit (66), the first connection (80) has the projection (84) of the rotary-angle limiting means (90) in the form of a pin-shaped extension (85).

12. Torsional vibration damper according to Claim 11, or hydrodynamic coupling apparatus according to Claim 11, **characterized in that** the second drive-side transmission element (95) of the output-side damper unit (100) are fastened to one another radially within the latter by way of a second connection (104), and, in order to form a second rotary-angle limiting means (116), the second connection (104) engages through a recess (118) in a second output-side transmission element (120) of the output-side damper unit (100), the recess (118) being configured with a corresponding circumferential extent in relation to the second connection (104) in order to ensure a predefined relative deflection width between the two transmission elements (95, 120).

13. Hydrodynamic coupling apparatus having a lock-up clutch (42), which has a torsional vibration damper (68) according to Claim 12 and is **characterized in that** the output-side transmission element (120) of the output-side damper unit (100) is fixed to a turbine hub (33) so as to rotate with it, and the second connection (104) is provided in terms of effect between the two damping units (66, 100) in an additional function as a driver (122) for the rotationally fixed attachment of a turbine-wheel shell (21) of the turbine wheel (19).

14. Torsional vibration damper according to either of Claims 11 and 12, or hydrodynamic coupling apparatus according to one of Claims 11 to 13, **characterized in that** at least one of the two connections (80, 104) is configured as a riveted connection (82, 106).

15. Hydrodynamic coupling apparatus having a lock-up clutch (42), which has a torsional vibration damper (68) according to Claims 1 and 5 and is **characterized in that** the receiving component (62) for the carrier part (76) is formed by a holding bracket (170) which is connected in a rotationally fixed manner to at least one disc (176) which is arranged axially between the piston (40) of the lock-up clutch (42) and the converter cover (7) of the converter housing (5).

16. Hydrodynamic coupling apparatus according to Claim 15, **characterized in that** the holding bracket (170) has a serration (172), into which the serration (174) of the disc (176) engages such that it is rotationally fixed but can be displaced axially.

17. Hydrodynamic coupling apparatus according to Claim 15 or 16, **characterized in that** the disc (176) is provided with a friction lining (178) at least on one of its axial sides.

18. Hydrodynamic coupling apparatus according to Claim 16, **characterized in that** the holding bracket (170) is connected via its serration (172) to the serrations (174) of at least two discs (176) such that it is rotationally fixed but can be displaced axially, and an intermediate disc (184) is provided in the axial direction between in each case two discs (176), which intermediate disc (184) engages in a rotationally fixed manner by way of a serration (186) into an associated serration (182) of an anti-rotation safeguard (180).

19. Hydrodynamic coupling apparatus according to Claim 18, **characterized in that** the anti-rotation safeguard (180) is received in a rotationally fixed manner on the housing cover (7) of the clutch housing (5).

## Revendications

1. Amortisseur d'oscillations de torsion (68) pour un embrayage de court-circuitage (42), présentant un piston (40), d'un dispositif d'embrayage hydrodynamique (1), comprenant un élément de transfert (64), du côté de l'entraînement, d'au moine une unité d'amortissement (66, 100) qui est en liaison fonctionnelle avec un composant de sortie (36) par le biais d'un élément de transfert (72) du côté de la sortie qui lui est associé, l'unité d'amortissement (66, 100) étant associée à au moins une limitation d'angle de rotation (90, 116) qui dispose d'au moins une saillie (84) faisant saillie au niveau de l'un des éléments de transfert (64, 72) dans la direction de l'autre élément de transfert respectif (64) et d'un évidement (86) prévu sur l'autre élément de transfert (64) pour recevoir la saillie (84), l'évidement (86) étant réalisé pour garantir une largeur de déviation relative prédéfinie entre les deux éléments de transfert (64, 72) avec une étendue périphérique correspondante par rapport à la saillie (84), l'élément de transfert (64) de l'unité d'amortissement (66) présentant l'évidement (86) étant prévu dans un composant de réception (62) et étant supporté au moins dans la région d'étendue de l'évidement (86) sur un composant de réception (62),
**caractérisé en ce que**
la saillie (84) vient en prise dans l'évidement associé (86) au niveau du même élément de transfert de réception (72) de l'unité d'amortissement (66) avec un jeu prédéterminé (92) dans la direction axiale par rapport au composant de réception (62).

2. Amortisseur d'oscillations de torsion selon la revendication 1,
**caractérisé en ce que**
l'évidement (86) dispose d'extrémités du côté périphérique (88) qui sont adaptées à la forme en section transversale de la saillie (84) en termes de leur configuration géométrique.

3. Amortisseur d'oscillations de torsion selon la revendication 1 ou 2,
**caractérisé en ce que**
la saillie (84) est réalisée essentiellement sous forme de tourillon et les extrémités du côté périphérique (88) de l'évidement (86) sont réalisées essentiellement sous forme semi-circulaire.

4. Dispositif d'embrayage hydrodynamique comprenant un embrayage de court-circuitage (42) qui présente un amortisseur d'oscillations de torsion (68) selon la revendication 1 et **caractérisé en ce que** le jeu (92) dans la direction axiale entre les deux éléments de transfert (64, 72) correspond au moins à la largeur de déviation du piston (40) de l'embrayage de court-circuitage (42) dans cette direction.

5. Amortisseur d'oscillations de torsion selon l'une quelconque des revendications 1 à 3,
ou dispositif d'embrayage hydrodynamique selon la revendication 4,
**caractérisé en ce que**
l'élément de transfert (64) présentant l'évidement (86) dispose d'une partie de support (76) contenant l'évidement (86) et d'au moins un élément de commande (78) prévu sur la partie de support (76) pour l'accumulateur d'énergie (70) de l'unité d'amortissement (66).

6. Amortisseur d'oscillations de torsion selon la revendication 5 ou dispositif d'embrayage hydrodynamique selon la revendication 5,
**caractérisé en ce que**
la partie de support (76) de l'élément de transfert (64) présente dans la direction périphérique entre deux évidements respectifs (86) à chaque fois un point de fixation (58) pour relier l'élément de transfert (64) au composant de réception (62).

7. Amortisseur d'oscillations de torsion selon la revendication 5 ou dispositif d'embrayage hydrodynamique selon la revendication 6,
**caractérisé en ce que**
la partie de support (76) de l'élément de transfert (64) est réalisée sous forme essentiellement annulaire.

8. Amortisseur d'oscillations de torsion selon la revendication 5 ou dispositif d'embrayage hydrodynamique selon la revendication 5,
**caractérisé en ce que**
l'au moins un élément de commande (78) de l'élément de transfert (64) fait saillie essentiellement radialement par rapport à sa partie de support (76).

9. Dispositif d'embrayage hydrodynamique comprenant un embrayage de court-circuitage (42), qui présente un amortisseur d'oscillations de torsion selon les revendications 1, 4 et 5 et **caractérisé en ce que** le composant de réception (62) pour la partie de support (76) est formé par le piston (40) et est connecté de manière solidaire en rotation par le biais de son point de fixation (58) au piston (40) par le biais d'un moyen de fixation (58) traversant à chaque fois une ouverture (60) dans l'élément de transfert (64) du côté de l'entraînement.

10. Amortisseur d'oscillations de torsion selon l'une quelconque des revendications 1 à 3 ou 5 à 6, ou dispositif d'embrayage hydrodynamique selon l'une quelconque des revendications 4 à 9, **caractérisé en ce que**
des premiers accumulateurs d'énergie (70) d'une unité d'amortissement (66) du côté de l'entraînement, sollicités dans la direction périphérique par un premier élément de transfert (64) du côté de l'entraînement sont supportés avec leurs extrémités opposées sur des premiers éléments de commande du côté de la sortie (94) d'un élément de transfert intermédiaire (96) servant de premier élément de transfert du côté de la sortie (72) pour l'unité d'amortissement du côté de l'entraînement (66), et l'élément de transfert intermédiaire (96) reçoit la saillie (84) de la limitation d'angle de rotation (90) et est prévu pour solliciter des deuxièmes accumulateurs d'énergie (102) d'une unité d'amortissement du côté de la sortie (100) avec des deuxièmes éléments de commande du côté de l'entraînement (98).

11. Amortisseur d'oscillations de torsion selon la revendication 10 ou dispositif d'embrayage hydrodynamique selon la revendication 10,
**caractérisé en ce que**
l'élément de transfert intermédiaire (96), pour former un deuxième élément de transfert du côté de l'entraînement (95) pour l'unité d'amortissement du côté de la sortie (100), est connecté fixement par le biais d'une première liaison (80) à une plaque de recouvrement (114), et la première liaison (80) dispose, sur son côté tourné à chaque fois vers l'élément de transfert du côté de l'entraînement (64) de l'unité d'amortissement du côté de l'entraînement (66), de la saillie (84) de la limitation d'angle de rotation (90) sous la forme d'un prolongement (85) en forme de tourillon.

12. Amortisseur d'oscillations de torsion selon la revendication 11 ou dispositif d'embrayage hydrodynamique selon la revendication 11,
**caractérisé en ce que**
le deuxième élément de transfert du côté de l'entraînement (95) de l'unité d'amortissement du côté de la sortie (100) est fixé à celle-ci radialement à l'intérieur de celle-ci par une deuxième liaison (104) et la deuxième liaison (104), pour la formation d'une deuxième limitation d'angle de rotation (116), vient en prise à travers un évidement (118) dans un deuxième élément de transfert du côté de la sortie (120) de l'unité d'amortissement du côté de la sortie (100), l'évidement (118) étant réalisé pour garantir une largeur de déviation relative prédéfinie entre les deux éléments de transfert (95, 120) avec une étendue périphérique correspondante par rapport à la deuxième liaison (104).

13. Dispositif d'embrayage hydrodynamique comprenant un embrayage de court-circuitage (42), qui présente un amortissement d'oscillations de torsion (68) selon la revendication 12, et **caractérisé en ce que** l'élément de transfert du côté de la sortie (120) de l'unité d'amortissement du côté de la sortie (100) est solidaire en rotation d'un moyeu de turbine (33), et la deuxième liaison (104) est prévue, dans une fonction supplémentaire, en tant que moyen d'entraînement (122) pour la liaison solidaire en rotation d'une coque de roue de turbine (21) de la roue de turbine (19) de manière fonctionnelle entre les deux unités d'amortissement (66, 100).

14. Amortisseur d'oscillations de torsion selon l'une quelconque des revendications 11 à 12 ou dispositif d'embrayage hydrodynamique selon l'une quelconque des revendications 11 à 13,
**caractérisé en ce**
**qu'**au moins l'une des deux liaisons (80, 104) est réalisée sous forme de rivetage (82, 106).

15. Dispositif d'embrayage hydrodynamique comprenant un embrayage de court-circuitage (42) qui présente un amortisseur d'oscillations de torsion (68) selon les revendications 1 et 5 et **caractérisé en ce que** le composant de réception (62) pour la partie de support (76) est formé par un étrier de retenue (170) qui est connecté de manière solidaire en rotation à au moins un disque (176) disposé entre le piston (40) de l'embrayage de court-circuitage (42) et le couvercle de convertisseur (7) du boîtier de convertisseur (5).

16. Dispositif d'embrayage hydrodynamique selon la revendication 15, **caractérisé en ce que** l'étrier de retenue (170) dispose d'une denture (172) dans laquelle s'engage de manière solidaire en rotation mais déplaçable axialement, la denture (174) du disque (176).

17. Dispositif d'embrayage hydrodynamique selon la revendication 15 ou 16, **caractérisé en ce que** le disque (176) est pourvu au moins sur l'un de ses côtés axiaux d'une garniture de friction (178).

18. Dispositif d'embrayage hydrodynamique selon la revendication 16, **caractérisé en ce que** l'étrier de retenue (170) est connecté par le biais de sa denture (172) aux dentures (174) d'au moins deux disques (176) de manière solidaire en rotation mais déplaçable axialement, et un disque intermédiaire (184) est prévu dans la direction axiale entre deux disques (176) respectifs, lequel vient en prise de manière solidaire en rotation avec une denture (186) dans une denture associée (182) d'une fixation en rotation (180).

19. Dispositif d'embrayage hydrodynamique selon la revendication 18, **caractérisé en ce que** la fixation en rotation (180) est reçue de manière solidaire en rotation sur le couvercle de boîtier (7) du boîtier d'embrayage (5).
